(19) Europäisches Patentamt
European Patent Office
Office européen des brevets

(11) **EP 4 079 709 B1**

(12) **EUROPEAN PATENT SPECIFICATION**

(45) Date of publication and mention
of the grant of the patent:
**19.02.2025 Bulletin 2025/08**

(21) Application number: **20903662.3**

(22) Date of filing: **29.10.2020**

(51) International Patent Classification (IPC):
**C04B 35/645** (2006.01)  **C04B 35/5835** (2006.01)
**C04B 35/626** (2006.01)  **C04B 35/63** (2006.01)

(52) Cooperative Patent Classification (CPC):
**C04B 35/5831; C04B 35/6303; C04B 35/645;**
C04B 35/62675; C04B 2235/3847; C04B 2235/386;
C04B 2235/402; C04B 2235/405; C04B 2235/656;
C04B 2235/6567; C04B 2235/72; C04B 2235/784;
C04B 2235/785; C04B 2235/786; C04B 2235/80;
(Cont.)

(86) International application number:
**PCT/JP2020/040555**

(87) International publication number:
**WO 2021/124701 (24.06.2021 Gazette 2021/25)**

(54) **CUBIC BORON NITRIDE SINTERED MATERIAL AND METHOD FOR MANUFACTURING SAME**

KUBISCHES BORNITRIDSINTERMATERIAL UND VERFAHREN ZUR HERSTELLUNG DAVON

MATERIAU FRITTÉ DE NITRURE DE BORE CUBIQUE, ET PROCÉDÉ DE FABRICATION DE CELUI-CI

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.12.2019 JP 2019226361**

(43) Date of publication of application:
**26.10.2022 Bulletin 2022/43**

(73) Proprietor: **Sumitomo Electric Hardmetal Corp.
Itami-shi, Hyogo 664-0016 (JP)**

(72) Inventors:
• **ABE, Machiko**
  **Itami-shi, Hyogo 664-0016 (JP)**
• **KUKINO, Satoru**
  **Itami-shi, Hyogo 664-0016 (JP)**
• **MATSUKAWA, Michiko**
  **Itami-shi, Hyogo 664-0016 (JP)**
• **HIGASHI, Taisuke**
  **Itami-shi, Hyogo 664-0016 (JP)**

(74) Representative: **Boult Wade Tennant LLP
Salisbury Square House
8 Salisbury Square
London EC4Y 8AP (GB)**

(56) References cited:
WO-A1-2005/066381     WO-A1-2016/104563
WO-A1-2017/077829     JP-A- 2008 208 027
JP-A- 2015 505 740     US-A1- 2017 369 314

(52) Cooperative Patent Classification (CPC): (Cont.)
C04B 2235/96

**Description**

TECHNICAL FIELD

The present disclosure relates to a cubic boron nitride sintered material and a method of producing the cubic boron nitride sintered material.

BACKGROUND ART

A cubic boron nitride (hereinafter, also referred to as "cBN") sintered material has very high hardness and has excellent thermal stability and chemical stability, and is therefore used in a cutting tool or a wear-resistant tool.
Each of Japanese Patent Laying-Open No. 2005-187260 (PTL 1) and WO 2005/066381 (PTL 2) discloses a method of obtaining a cubic boron nitride including cBN grains and a binder by mixing a cubic boron nitride powder and a binder powder to obtain a powder mixture and sintering the powder mixture under an ultra-high pressure and high temperature condition.
Each of Japanese Patent Laying-Open No. 2015-202981 (PTL 3) and Japanese Patent Laying-Open No. 2015-202980 (PTL 4) discloses a method of obtaining a cubic boron nitride composite sintered material including a cubic boron nitride polycrystalline material and a ceramic phase by mixing normal pressure type boron nitride and a ceramic to obtain a mixture and sintering the mixture under an ultra-high pressure and high temperature condition. US 2017/369314 A1 discloses a polycrystalline cubic boron nitride compact.

CITATION LIST

PATENT LITERATURE

PTL 1: Japanese Patent Laying-Open No. 2005-187260
PTL 2: WO 2005/066381
PTL 3: Japanese Patent Laying-Open No. 2015-202981
PTL 4: Japanese Patent Laying-Open No. 2015-202980

SUMMARY OF INVENTION

A cubic boron nitride sintered material according to the present disclosure is a cubic boron nitride sintered material including: more than or equal to 70 volume% and less than or equal to 98 volume% of cubic boron nitride grains; and a binder phase, wherein

the binder phase includes at least one selected from a group consisting of one or more first compounds and a solid solution originated from the first compounds, the one or more first compounds being selected from a group consisting of a cobalt compound, an aluminum compound, and tungsten carbide,
the cubic boron nitride grains include, on number basis, more than or equal to 50% of cubic boron nitride grains each having an equivalent circle diameter of more than 0.5 $\mu$m, and includes, on number basis, less than or equal to 50% of cubic boron nitride grains each having an equivalent circle diameter of more than 2 $\mu$m, and
when a mass of the cubic boron nitride grains is assumed as 100 mass%, a total content of lithium, magnesium, calcium, strontium, beryllium, and barium in the cubic boron nitride grains is less than 0.001 mass%.

A method of producing a cubic boron nitride sintered material according to the present disclosure is a method of producing the above-described cubic boron nitride sintered material, the method including:

obtaining a powder mixture by mixing a hexagonal boron nitride powder and a binder powder; and
obtaining the cubic boron nitride sintered material by sintering the powder mixture by increasing a pressure to more than or equal to 8 GPa and less than or equal to 20 GPa, increasing a temperature to more than or equal to 2300°C and less than or equal to 2500°C, and holding, for more than or equal to 30 minutes and less than 90 minutes, the powder mixture at maximum pressure and maximum temperature reached by increasing the pressure and the temperature.

DETAILED DESCRIPTION

[Problem to be Solved by the Present Disclosure]

Each of tools employing the cubic boron nitride sintered materials of PTL 1 and PTL 2 has been required to attain further improved tool performance such as wear resistance and breakage resistance particularly when used in high-efficiency processing of cast iron. As a result of reviewing mechanisms of occurrence of wear and breakage in each of the tools employing the cubic boron nitride sintered materials of PTL 1 and PTL 2, the present inventors have newly anticipated the following mechanism.

In each of PTL 1 and PTL 2, the cubic boron nitride powder is used as a source material. The cubic boron nitride powder is produced by treating hexagonal boron nitride (hereinafter, also referred to as "hBN") and a catalyst under high temperature and high pressure that are thermal stability conditions for cBN. As the catalyst, an alkali metal element (lithium), an alkaline earth metal element (magnesium, calcium, strontium, beryllium, or barium), or the like is generally used. Therefore, the obtained cubic boron nitride powder includes the catalyst element.

When cutting is performed using a tool employing a cubic boron nitride sintered material, pressure and temperature of the tool in the vicinity of a contact point with a workpiece are increased. Particularly, in the case of the high-efficiency processing of cast iron, the pressure and temperature are significantly increased. When the cubic boron nitride sintered material includes the catalyst element, the catalyst element promotes phase conversion from cubic boron nitride to hexagonal boron nitride under the condition of the pressure and temperature of the tool in the vicinity of the contact point with the workpiece in the case of the high-efficiency processing of cast iron. Therefore, thermal conductivity or hardness tends to be decreased in the vicinity of the contact point of the cutting edge of the tool with the workpiece. The decreased thermal conductivity and decreased hardness are considered to cause a decrease in cutting performance such as wear resistance and breakage resistance.

Each of tools employing the cubic boron nitride composite sintered materials of PTL 3 and PTL 4 has been also required to attain further improved tool performance such as wear resistance and breakage resistance particularly when used in high-efficiency processing of cast iron. As a result of reviewing mechanisms of occurrence of wear and breakage in each of the tools employing the cubic boron nitride composite sintered materials of PTL 3 and PTL 4, the present inventors have newly anticipated the following mechanism.

In each of PTL 3 and PTL 4, the cubic boron nitride single crystal in the cubic boron nitride polycrystalline material has an small average crystal grain size of less than or equal to 500 nm and therefore has fine grains. When a large amount of the fine grain component exists in the cubic boron nitride sintered material, toughness and thermal conductivity of the cubic boron nitride sintered material tend to be decreased. This is considered to cause a decrease in tool performance such as wear resistance and breakage resistance particularly in the high-efficiency processing of cast iron.

Based on the newly anticipated mechanism, the present inventors hypothesized that the tool performance such as wear resistance and breakage resistance is affected by the amount of the catalyst element in the cubic boron nitride sintered material and the grain sizes of the cubic boron nitride single crystal.

The present disclosure has been obtained by the present inventors as a result of diligent study based on the anticipated new mechanism and the hypothesis.

It is an object of the present disclosure to provide a cubic boron nitride sintered material that can have excellent cutting performance even in high-efficiency processing of cast iron when used as a tool.

[Advantageous Effect of the Present Disclosure]

The cubic boron nitride sintered material according to the present disclosure can have excellent cutting performance even in high-efficiency processing of cast iron when used as a tool.

[Description of Embodiments]

First, embodiments of the present disclosure are listed and described.

(1) A cubic boron nitride sintered material according to the present disclosure is a cubic boron nitride sintered material including: more than or equal to 70 volume% and less than or equal to 98 volume% of cubic boron nitride grains; and a binder phase, wherein

the binder phase includes at least one selected from a group consisting of one or more first compounds and a solid solution originated from the first compounds, the one or more first compounds being selected from a group consisting of a cobalt compound, an aluminum compound, and tungsten carbide,
the cubic boron nitride grains include, on number basis, more than or equal to 50% of cubic boron nitride grains each having an equivalent circle diameter of more than 0.5 $\mu$m, and includes, on number basis, less than or equal to 50% of cubic boron nitride grains each having an equivalent circle diameter of more than 2 $\mu$m, and when a mass of the cubic boron nitride grains is assumed as 100 mass%, a total content of lithium, magnesium, calcium, strontium, beryllium, and barium in the cubic boron nitride grains is less than 0.001 mass%.

The cubic boron nitride sintered material according to the present disclosure can have excellent cutting performance even in high-efficiency processing of cast iron when used as a tool.

(2) In an X-ray diffraction spectrum of the cubic boron nitride sintered material, a relation of the following formula I is preferably indicated:

$$(IA+IB+IC)/ID \leq 0.05 \ldots \text{formula I,}$$

where
IA represents a peak intensity originated from compressed hexagonal boron nitride, IB represents a peak intensity originated from hexagonal boron nitride, IC represents a peak intensity originated from wurtzite type boron nitride, and ID represents a peak intensity originated from cubic boron nitride.
Thus, a tool using the cubic boron nitride can have excellent wear resistance even in the high-efficiency processing of cast iron.

(3) A method of producing a cubic boron nitride sintered material according to the present disclosure is a method of producing the above-described cubic boron nitride sintered material, the method including:

obtaining a powder mixture by mixing a hexagonal boron nitride powder and a binder powder; and
obtaining the cubic boron nitride sintered material by sintering the powder mixture by increasing a pressure to more than or equal to 8 GPa and less than or equal to 20 GPa, increasing a temperature to more than or equal to 2300°C and less than or equal to 2500°C, and holding, for more than or equal to 30 minutes and less than 90 minutes, the powder mixture at maximum pressure and maximum temperature reached by increasing the pressure and the temperature.

Thus, the cubic boron nitride sintered material can be obtained which can have excellent cutting performance even in the high-efficiency processing of cast iron when used as a tool.

[Details of Embodiments of the Present Disclosure]

The following describes a cubic boron nitride sintered material and a method of producing the cubic boron nitride sintered material according to the present disclosure.
When a compound or the like is expressed by a chemical formula in the present specification and an atomic ratio is not particularly limited, it is assumed that all the conventionally known atomic ratios are included. The atomic ratio should not be necessarily limited only to one in the stoichiometric range. For example, when "WC" is described, an atomic ratio in the WC include all the conventionally known atomic ratios. The same also applies to compounds other than the "WC".

[First Embodiment: Cubic Boron Nitride Sintered Material]

A cubic boron nitride sintered material according to the present disclosure is a cubic boron nitride sintered material including: more than or equal to 70 volume% and less than or equal to 98 volume% of cubic boron nitride grains; and a binder phase, wherein the binder phase includes at least one selected from a group consisting of one or more first compounds and a solid solution originated from the first compounds, the one or more first compounds being selected from a group consisting of a cobalt compound, an aluminum compound, and tungsten carbide, the cubic boron nitride grains include, on number basis, more than or equal to 50% of cubic boron nitride grains each having an equivalent circle diameter of more than 0.5 $\mu$m, and includes, on number basis, less than or equal to 50% of cubic boron nitride grains each having an equivalent circle diameter of more than 2 $\mu$m, and when a mass of the cubic boron nitride grains is assumed as 100 mass%, a total content of lithium, magnesium, calcium, strontium, beryllium, and barium in the cubic boron nitride grains is less than 0.001 mass%.
The cubic boron nitride sintered material according to the present disclosure can have excellent cutting performance even in high-efficiency processing of cast iron when used as a tool. This is presumably due to the following reasons (i) to (iv).

(i) The cubic boron nitride sintered material according to the present disclosure includes more than or equal to 70 volume% and less than or equal to 98 volume% of the cubic boron nitride grains having excellent strength and toughness. Thus, the cBN sintered material can also have excellent strength and toughness. Therefore, a tool employing the cubic boron nitride sintered material can have excellent wear resistance and breakage resistance even in the high-efficiency processing of cast iron.

(ii) In the cubic boron nitride sintered material according to the present disclosure, the binder phase includes at least one selected from a group consisting of one or more first compounds and a solid solution originated from the first compounds, the one or more first compounds being selected from a group consisting of a cobalt compound, an aluminum compound, and tungsten carbide. Each of the first compounds has high strength and toughness itself and serves to improve binding force between the cBN grains. Therefore, a tool employing the cubic boron nitride sintered material including the first compound(s) as a binder phase can have excellent wear resistance and breakage resistance even in the high-efficiency processing of cast iron.

(iii) In the cubic boron nitride sintered material according to the present disclosure, the cubic boron nitride grains include, on number basis, more than or equal to 50% of cubic boron nitride grains each having an equivalent circle diameter of more than 0.5 $\mu$m, and includes, on number basis, less than or equal to 50% of cubic boron nitride grains each having an equivalent circle diameter of more than 2 $\mu$m.

When the cubic boron nitride grains are fine grains, the toughness and thermal conductivity of the cubic boron nitride sintered material tend to be decreased. In the cubic boron nitride sintered material according to the present disclosure, the cubic boron nitride grains each having an equivalent circle diameter of more than 0.5 $\mu$m are more than or equal to 50% on number basis. That is, since the ratio of the cubic boron nitride grains each having an equivalent circle diameter of less than or equal to 0.5 $\mu$m, i.e., the ratio of the fine grains, is less than or equal to 50% and therefore the ratio of the fine grains is small, the cubic boron nitride sintered material can have excellent toughness and thermal conductivity.

When the cubic boron nitride grains are coarse grains, the strength of the cubic boron nitride sintered material tends to be decreased. In the cubic boron nitride sintered material according to the present disclosure, since the ratio of the cubic boron nitride grains each having an equivalent circle diameter of more than 2 $\mu$m, i.e., the ratio of the coarse grains, is less than or equal to 50% and therefore the ratio of the coarse grains is small, the cubic boron nitride sintered material can have excellent strength.

Therefore, the tool employing the cubic boron nitride sintered material according to the present disclosure can have excellent wear resistance and breakage resistance even in the high-efficiency processing of cast iron.

(iv) In the cubic boron nitride sintered material according to the present disclosure, when a mass of the cubic boron nitride grains is assumed as 100 mass%, a total content of lithium, magnesium, calcium, strontium, beryllium, and barium (hereinafter, these elements are also referred to as "catalyst elements") in the cubic boron nitride grains is less than 0.001 mass%. When the catalyst elements are present in the cubic boron nitride grains, the catalyst elements promote phase conversion from cubic boron nitride to hexagonal boron nitride under a condition of pressure and temperature in the vicinity of a contact point between the tool and a workpiece in the high-efficiency processing of cast iron. Therefore, thermal conductivity and hardness tend to be decreased in the vicinity of the contact point of the cutting edge of the tool with the workpiece.

In the cubic boron nitride sintered material according to the present disclosure, since the total content of the catalyst elements in the cubic boron nitride grains is less than 0.001 mass%, the phase conversion from cubic boron nitride to hexagonal boron nitride by the catalyst elements is less likely to occur even under the condition of pressure and temperature in the high-efficiency processing of cast iron. Therefore, the tool employing the cubic boron nitride sintered material according to the present disclosure can have excellent wear resistance and breakage resistance even in the high-efficiency processing of cast iron.

<Composition>

The cubic boron nitride sintered material according to the present disclosure includes: more than or equal to 70 volume% and less than or equal to 98 volume% of the cubic boron nitride grains; and the binder phase. Since the cubic boron nitride sintered material according to the present disclosure includes the cubic boron nitride having excellent strength and toughness, the cubic boron nitride sintered material can also have excellent strength and toughness. Therefore, the tool employing the cubic boron nitride sintered material can have excellent wear resistance and breakage resistance even in the high-efficiency processing of cast iron.

The lower limit of the content ratio of the cBN grains in the cBN sintered material is 70 volume%, and is preferably 80 volume%. The upper limit of the content ratio of the cBN grains in the cBN sintered material is 98 volume%. The content ratio of the cBN grains in the cBN sintered material is preferably more than or equal to 80 volume% and less than or equal to 98 volume%.

Since the cubic boron nitride sintered material according to the present disclosure has high strength and includes the binder phase that serves to improve binding force between the cBN grains, the cubic boron nitride sintered material can also have excellent strength and toughness. Therefore, the tool employing the cubic boron nitride sintered material can have excellent wear resistance and breakage resistance even in the high-efficiency processing of cast iron.

The lower limit of the content ratio of the binder phase in the cBN sintered material is preferably 2 volume%. The upper limit of the content ratio of the binder phase in the cBN sintered material is preferably 30 volume%, and is more preferably 20 volume%. The content ratio of the binder phase in the cBN sintered material is preferably more than or equal to 2 volume% and less than or equal to 30 volume%, and is more preferably more than or equal to 2 volume% and less than or equal to 20 volume%.

The content ratio (volume%) of the cBN grains and the content ratio (volume%) of the binder phase in the cBN sintered material can be checked by performing structure observation, elemental analysis, and the like onto the cBN sintered material using an energy dispersive X-ray analysis device (EDX) ("Octane Elect EDS system" (trademark) provided by EDAX) accompanied with a scanning electron microscope (SEM) ("JSM-7800F" (trademark) provided by JEOL).

Specifically, the content ratio (volume%) of the cBN grains can be calculated as follows. First, the cBN sintered material is cut at an arbitrary location to produce a sample including a cross section of the cBN sintered material. For the formation of the cross section, a focused ion beam device, a cross section polisher device, or the like can be used. Next, the cross section is observed by the SEM at a magnification of 5000x to obtain a reflected electron image. In the reflected electron image, the cBN grains look black (dark fields) and a region having the binder phase existing therein is gray or white (bright fields).

Next, the reflected electron image is subjected to binarization processing using image analysis software (for example, "WinROOF" provided by Mitani Corporation). From the image having been through the binarization processing, the area ratio of pixels originated from dark fields (pixels originated from the cBN grains) in the area of the measurement visual field is calculated. The calculated area ratio is regarded as volume%, thereby finding the content ratio (volume%) of the cBN grains.

From the image having been through the binarization processing, the area ratio of pixels originated from bright fields (pixels originated from the binder phase) in the area of the measurement visual field is calculated, thereby finding the content ratio (volume%) of the binder phase.

The cubic boron nitride sintered material according to the present disclosure may include an inevitable impurity as long as the effect of the present disclosure is exhibited. In the process of producing the cBN sintered material according to the present disclosure, a ball or container composed of, for example, a cemented carbide is used. Hence, an element or compound in the cemented carbide may be mixed in the cBN sintered material as an inevitable impurity, for example. When the cubic boron nitride sintered material includes such an inevitable impurity, the content of the inevitable impurity is preferably less than or equal to 0.1 mass%. The content of the inevitable impurity can be measured by secondary ion mass spectrometry (SIMS).

The cubic boron nitride sintered material according to the present disclosure may include at least one of compressed hexagonal boron nitride, hexagonal boron nitride, and wurtzite type boron nitride within the scope in which the effects of the present disclosure are exhibited. Here, the "compressed hexagonal boron nitride" refers to a hexagonal boron nitride having a crystal structure similar to the crystal structure of an ordinary hexagonal boron nitride and having an interplanar spacing smaller than the interplanar spacing (0.333 nm) of the ordinary hexagonal boron nitride in a c-axis direction. The respective content ratios of the compressed hexagonal boron nitride, the hexagonal boron nitride, and the wurtzite type boron nitride with respect to the cubic boron nitride will be described in detail in the below-described section <X-Ray Diffraction Spectrum>.

<Cubic Boron Nitride Grains>

(Equivalent Circle Diameter)

The cubic boron nitride grains included in the cubic boron nitride sintered material according to the present disclosure include, on number basis, more than or equal to 50% of cubic boron nitride grains each having an equivalent circle diameter of more than 0.5 $\mu$m, and includes, on number basis, less than or equal to 50% of cubic boron nitride grains each having an equivalent circle diameter of more than 2 $\mu$m. It should be noted that when calculating on number basis, grains each having an equivalent circle diameter of less than 0.05 $\mu$m are not counted.

When the ratio of the cubic boron nitride grains each having an equivalent circle diameter of more than 0.5 $\mu$m is more than or equal to 50%, the cubic boron nitride sintered material can have excellent toughness and thermal conductivity. When the ratio of the cubic boron nitride grains each having an equivalent circle diameter of more than 2 $\mu$m is less than or equal to 50%, the cubic boron nitride sintered material can have excellent strength. Therefore, the tool employing the cubic boron nitride sintered material according to the present disclosure can have excellent wear resistance and breakage resistance even in the high-load processing of hardened steel.

The lower limit of the number-based ratio of the cubic boron nitride grains each having an equivalent circle diameter of more than 0.5 μm in the whole of the cubic boron nitride grains is 50%, and is preferably 70%. The upper limit of the number-based ratio of the cubic boron nitride grains each having an equivalent circle diameter of more than 0.5 μm in the whole of the cubic boron nitride grains is preferably 100%. The number-based ratio of the cubic boron nitride grains each having an equivalent circle diameter of more than 0.5 μm in the whole of the cubic boron nitride grains is preferably more than or equal to 50% and less than or equal to 100%, and is more preferably more than or equal to 70% and less than or equal to 100%.

The lower limit of the number-based ratio of the cubic boron nitride grains each having an equivalent circle diameter of more than 2 μm in the whole of the cubic boron nitride grains is preferably 0%. The upper limit of the ratio of the cubic boron nitride grains each having an equivalent circle diameter of more than 2 μm in the whole of the cubic boron nitride grains is 50%, and is preferably 40%. The ratio of the cubic boron nitride grains each having an equivalent circle diameter of more than 2 μm in the whole of the cubic boron nitride grains is preferably more than or equal to 0% and less than or equal to 50%, and is more preferably more than or equal to 0% and less than or equal to 40%.

The following specifically describes: a method of calculating the number-based ratio of the cubic boron nitride grains each having an equivalent circle diameter of more than 0.5 μm in the cubic boron nitride grains; and a method of calculating the number-based ratio of the cubic boron nitride grains each having an equivalent circle diameter of more than 2 μm in the cubic boron nitride grains.

First, the cubic boron nitride sintered material is cut by a diamond grindstone electrodeposited wire or the like so as to expose measurement positions, and the cross section thereof is polished. When the cubic boron nitride sintered material is used as a portion of a tool, the portion of the cubic boron nitride sintered material is cut out by the diamond grindstone electrodeposited wire or the like, and the cross section of the cut-out portion is polished. Five measurement positions are arbitrarily set on the polished surface. Five SEM images are obtained by observing the five measurement positions using an SEM ("JSM-7500F" (trademark) provided by JEOL). The size of the measurement visual field is set to 12 μm × 15 μm and the observation magnification is set to 10000x.

By processing each of the five SEM images using image processing software (Win Roof ver.7.4.5), the total number of the cubic boron nitride grains observed in the measurement visual field and the equivalent circle diameter of each of the cubic boron nitride grains are calculated.

The ratio of the number of the cubic boron nitride grains each having an equivalent circle diameter of more than 0.5 μm is calculated using, as a denominator, the total number of the cubic boron nitride grains included in each measurement visual field. The average value of the ratios of the numbers of the cubic boron nitride grains each having an equivalent circle diameter of more than 0.5 μm in the five measurement visual fields corresponds to the number-based ratio of the cubic boron nitride grains each having an equivalent circle diameter of more than 0.5 μm in the cubic boron nitride grains.

The ratio of the number of the cubic boron nitride grains each having an equivalent circle diameter of more than 2 μm is calculated using, as a denominator, the total number of the cubic boron nitride grains included in each measurement visual field. The average value of the ratios of the numbers of the cubic boron nitride grains each having an equivalent circle diameter of more than 2 μm in the five measurement visual fields corresponds to the number-based ratio of the cubic boron nitride grains each having an equivalent circle diameter of more than 2 μm in the cubic boron nitride grains.

It should be noted that in the measurement performed by the Applicant, as long as the total number of the cubic boron nitride grains and the equivalent circle diameter of each of the cubic boron nitride grains are measured in the same sample, results of measurement were not substantially varied even when measurement visual fields to be selected were changed and calculation was performed multiple times. It was confirmed that the results of measurement are not intentional even when a measurement visual field is set arbitrarily.

(Catalyst Elements)

In the cubic boron nitride sintered material according to the present disclosure, when the mass of the cubic boron nitride grains is assumed as 100 mass%, the total content of lithium, magnesium, calcium, strontium, beryllium, and barium in the cubic boron nitride grains is less than 0.001 mass%. In the cubic boron nitride sintered material according to the present disclosure, the content of the catalyst elements that promote the phase conversion from cubic boron nitride to hexagonal boron nitride is very small or no such catalyst elements are present, so that the phase conversion from cubic boron nitride to hexagonal boron nitride by the catalyst elements is less likely to occur even under the condition of pressure and temperature in the high-efficiency processing of cast iron. Therefore, the tool employing the cubic boron nitride sintered material according to the present disclosure can have excellent wear resistance and breakage resistance even in the high-efficiency processing of cast iron.

The lower limit of the total content of the catalyst elements in the cubic boron nitride grains is preferably 0 mass%. The upper limit of the total content of these catalyst elements is less than 0.001 mass%. The total content of these catalyst elements is preferably more than or equal to 0 mass% and less than 0.001 mass%.

The content of the catalyst elements in the cubic boron nitride grains can be measured by high-frequency induction plasma emission spectrometry ((ICP emission spectroscopy) with the use of a device "ICPS-8100" (trademark) provided by Shimadzu Corporation. Specifically, the measurement can be performed in the following procedure.

First, the cubic boron nitride sintered material is immersed in hydrofluoric-nitric acid for 48 hours in a sealed container so as to dissolve the binder phase in the hydrofluoric-nitric acid. Cubic boron nitride grains remaining in the hydrofluoric-nitric acid are subjected to the high-frequency induction plasma emission spectrometry so as to measure the content of each of the catalyst elements. Thus, the total content of the catalyst elements in the cubic boron nitride grains can be measured.

<Binder Phase>

The binder phase included in the cubic boron nitride sintered material according to the present disclosure includes at least one selected from a group consisting of one or more first compounds and a solid solution originated from the first compounds, the one or more first compounds being selected from a group consisting of a cobalt compound, an aluminum compound, and tungsten carbide. Since each of the first compounds has high strength and toughness itself and can serve to firmly bind the cubic boron nitride grains, the strength of the sintered material is improved, with the result that the sintered material can have excellent wear resistance.

Examples of the cobalt compound include $W_2CoB_6$, $W_3Co_3C$, and $W_2Co_{21}B_6$.

Examples of the aluminum compound include aluminum boride ($AlB_2$) and aluminum oxide ($Al_2O_3$).

One of the first compounds may be solely used or two or more of the first compounds may be used in combination.

The binder phase can include the solid solution originated from the first compounds. Here, the solid solution originated from the first compounds refers to a state in which two or more of the first compounds are dissolved in the crystal structures of the compounds, and refers to an interstitial solid solution or a substitutional solid solution.

The binder phase can consist only of one or more selected from a group consisting of the first compound(s) and the solid solution of the first compounds. Further, the binder phase can consist of: more than or equal to 99.9 volume% of a total of one or more selected from the group consisting of the first compound(s) and the solid solution of the first compounds; and a remainder.

Here, the remainder corresponds to an inevitable impurity in the binder phase. The content ratio of the inevitable impurity in the cubic boron nitride sintered material is preferably more than or equal to 0 mass% and less than or equal to 0.1 mass%.

The composition of the binder phase can be measured using an X-ray diffraction method. A specific measurement method is as follows.

First, the cubic boron nitride sintered material is cut by a diamond grindstone electrodeposited wire or the like to expose measurement positions, and the cross section thereof is polished. When the cubic boron nitride sintered material is used as a portion of a tool, the portion of the cubic boron nitride sintered material is cut out by the diamond grindstone electrodeposited wire or the like, and the cross section of the cut-out portion is polished. Five measurement positions are arbitrarily set on the polished surface.

An X-ray diffractometer ("MiniFlex600" (trademark) provided by Rigaku) is used to obtain an X-ray diffraction spectrum of the polished surface. Conditions for the X-ray diffractometer on this occasion are as follows.

Characteristic X ray: Cu-K$\alpha$ (wavelength of 1.54 Å)
Tube voltage: 45 kV
Tube current: 40 mA
Filter: multilayer mirror
Optical system: concentration method
X-ray diffraction method: $\theta$-2$\theta$ method.

Based on the obtained X-ray diffraction spectrum, the composition of the binder phase is identified.

<X-Ray Diffraction Spectrum>

In the cubic boron nitride sintered material according to the present disclosure, in an X-ray diffraction spectrum of the cubic boron nitride sintered material, a relation of the following formula I is preferably indicated:

$$(IA+IB+IC)/ID \leq 0.05 \text{ ... formula I,}$$

where
IA represents a peak intensity originated from compressed hexagonal boron nitride, IB represents a peak intensity originated from hexagonal boron nitride, IC represents a peak intensity originated from wurtzite type boron nitride, and ID represents a peak intensity originated from cubic boron nitride.

The compressed hexagonal boron nitride, the hexagonal boron nitride, the wurtzite type boron nitride and the cubic boron nitride all have similar degrees of electron densities. Therefore, the ratio of peak intensity IA, peak intensity IB, peak intensity IC, and peak intensity ID in the X-ray diffraction spectrum can be regarded as the volume ratio of the compressed hexagonal boron nitride, the hexagonal boron nitride, the wurtzite type boron nitride, and the cubic boron nitride in the cubic boron nitride sintered material.

When peak intensity IA, peak intensity IB, peak intensity IC, and peak intensity ID satisfy the above-described relation of formula I, the volume ratio of the compressed hexagonal boron nitride, the hexagonal boron nitride, and the wurtzite type boron nitride in the cubic boron nitride sintered material is much smaller than the volume ratio of the cubic boron nitride. Therefore, the influence on the cubic boron nitride sintered material by the compressed hexagonal boron nitride, the hexagonal boron nitride, and the wurtzite type boron nitride, i.e., decreased strength and toughness, is very little, with the result that the cubic boron nitride sintered material can have excellent wear resistance and breakage resistance.

The following specifically describes a method of measuring each of peak intensity IA originated from the compressed hexagonal boron nitride, peak intensity IB originated from the hexagonal boron nitride, peak intensity IC originated from the wurtzite type boron nitride, and peak intensity ID originated from the cubic boron nitride.

First, the cubic boron nitride sintered material is cut by a diamond grindstone electrodeposited wire or the like so as to expose measurement positions, and the cross section thereof is polished. When the cubic boron nitride sintered material is used as a portion of a tool, the portion of the cubic boron nitride sintered material is cut out by the diamond grindstone electrodeposited wire or the like, and the cross section of the cut-out portion is polished. Five measurement positions are arbitrarily set on the polished surface.

An X-ray diffractometer ("MiniFlex600" (trademark) provided by Rigaku) is used to obtain an X-ray diffraction spectrum of the polished surface. Conditions for the X-ray diffractometer on this occasion are as follows.

Characteristic X ray: Cu-K$\alpha$ (wavelength of 1.54 Å)
Tube voltage: 45 kV
Tube current: 40 mA
Filter: multilayer mirror
Optical system: concentration method
X-ray diffraction method: $\theta$-2$\theta$ method.

In the obtained X-ray diffraction spectrum, the following peak intensity IA, peak intensity IB, peak intensity IC, and peak intensity ID are measured.

Peak intensity IA: the peak intensity of the compressed hexagonal boron nitride obtained by excluding background from a peak intensity at a diffraction angle 2$\theta$ = about 28.5°.

Peak intensity IB: the peak intensity of the hexagonal boron nitride obtained by excluding background from a peak intensity at a diffraction angle 20 = about 41.6°.

Peak intensity IC: the peak intensity of the wurtzite type boron nitride obtained by excluding background from a peak intensity at a diffraction angle 2$\theta$ = about 40.8°.

Peak intensity ID: the peak intensity of the cubic boron nitride obtained by excluding background from a peak intensity at a diffraction angle 2$\theta$ = about 43.5°.

At each of the five measurement positions, peak intensity IA, peak intensity IB, peak intensity IC, and peak intensity ID are measured to obtain the value of (IA+IB+IC)/ID. The average value of the values of (IA+IB+IC)/ID at the five measurement positions corresponds to (IA+IB+IC)/ID in the cubic boron nitride sintered material.

It should be noted that in the measurement performed by the Applicant, as long as peak intensity IA, peak intensity IB, peak intensity IC, and peak intensity ID are measured in the same sample, results of measurement were not substantially varied even when measurement positions to be selected were changed and calculation was performed multiple times. It was confirmed that the results of measurement are not intentional even when a measurement position is set arbitrarily.

<Application>

The cubic boron nitride sintered material according to the present disclosure is suitably used for a cutting tool, a wear-resistant tool, a grinding tool, or the like.

Each of the cutting tool, the wear-resisting tool and the grinding tool employing the cubic boron nitride sintered material according to the present disclosure may be entirely constituted of the cubic boron nitride sintered material, or only a portion thereof (for example, a cutting edge portion in the case of the cutting tool) may be constituted of the cubic boron nitride sintered material. Moreover, a coating film may be formed on a surface of each of the tools.

Examples of the cutting tool include a drill, an end mill, an indexable cutting insert for drill, an indexable cutting insert for end mill, an indexable cutting insert for milling, an indexable cutting insert for turning, a metal saw, a gear cutting tool, a reamer, a tap, a cutting bite, and the like.

Examples of the wear-resistant tool include a die, a scriber, a scribing wheel, a dresser, and the like. Examples of the grinding tool include a grinding stone and the like.

[Second Embodiment: Method of Producing Cubic Boron Nitride Sintered Material]

A method of producing a cubic boron nitride sintered material according to the present disclosure is a method of producing the cubic boron nitride sintered material according to the first embodiment and includes: a first step of obtaining a powder mixture by mixing a hexagonal boron nitride powder and a binder powder; and a second step of obtaining the cubic boron nitride sintered material by sintering the powder mixture by increasing a pressure to more than or equal to 8 GPa and less than or equal to 20 GPa, increasing a temperature to more than or equal to 2300°C and less than or equal to 2500°C, and holding, for more than or equal to 30 minutes and less than 90 minutes, the powder mixture at maximum pressure and maximum temperature reached by increasing the pressure and the temperature.

<First Step>

First, a hexagonal boron nitride powder and a binder powder are prepared. The purity (content ratio of the hexagonal boron nitride) of the hexagonal boron nitride powder is preferably more than or equal to 98.5%, is more preferably more than or equal to 99%, and is most preferably 100%. Each of the particle sizes of the hexagonal boron nitride powder is not particularly limited, and can be more than or equal to 0.1 $\mu$m and less than or equal to 10 $\mu$m, for example.

The binder powder is selected in accordance with the composition of the intended binder phase. Specifically, particles each composed of the first compound(s) described in the binder phase of the first embodiment can be used. In addition to the particles composed of the first compound(s), aluminum particles can be used. Each of the particle sizes of the binder powder is not particularly limited, and can be more than or equal to 0.1 $\mu$m and less than or equal to 10 $\mu$m, for example.

Next, the hexagonal boron nitride powder and the binder powder are mixed to obtain a powder mixture. The mixing ratio of the hexagonal boron nitride powder and the binder powder is adjusted such that the ratio of the cubic boron nitride grains in the finally obtained cubic boron nitride sintered material becomes more than or equal to 70 volume% and less than or equal to 98 volume%.

For the mixing, for example, a mixing device such as a ball mill or an attritor can be used. A mixing time is, for example, more than or equal to about 5 hours and less than or equal to about 24 hours.

In the powder mixture thus obtained, the hexagonal boron nitride powder can include boron oxide generated by influence of surface oxidation during the mixing, can include moisture, or can include an adsorption gas. These impurities inhibit direct conversion from hexagonal boron nitride to cubic boron nitride. Otherwise, these impurities act as catalysts to cause grain growth, thereby weakening the binding between the cubic boron nitride grains. Therefore, it is preferable to remove the impurities by performing high temperature purification treatment. For example, the boron oxide or the adsorption gas can be removed by performing heat treatment onto the powder mixture under a condition of more than or equal to 2050°C in a nitrogen gas or under a condition of more than or equal to 1650°C in vacuum. The powder mixture thus obtained includes a very small amount of impurities and is suitable for direct conversion from hexagonal boron nitride to cubic boron nitride.

(Second Step)

In the second step, the cubic boron nitride sintered material is obtained by sintering the powder mixture by increasing a pressure to more than or equal to 8 GPa and less than or equal to 20 GPa, increasing a temperature to more than or equal to 2300°C and less than or equal to 2500°C, and holding, for more than or equal to 30 minutes and less than 90 minutes, the powder mixture at maximum pressure and maximum temperature reached by increasing the pressure and the temperature. On this occasion, the hexagonal boron nitride is converted directly into the cubic boron nitride. Further, the powder mixture is sintered at the same time as the conversion from hexagonal boron nitride to cubic boron nitride, thereby obtaining the cubic boron nitride sintered material.

In the second step, the conversion from hexagonal boron nitride to cubic boron nitride is performed directly without using a catalyst element. In order to attain this, the pressure and temperature in the sintering condition for the powder mixture need to be higher than the pressure and temperature in the conventional sintering condition in which a catalyst element is used.

Examples

The following describes the present embodiment more specifically by way of examples. However, the present embodiment is not limited by these examples.

[Example 1]

<Production of Cubic Boron Nitride Sintered Material>

[Samples No. 1 to No. 6 and Samples No. 13 to No. 19]

Each of cubic boron nitride sintered materials of samples No. 1 to No. 6 and samples No. 13 to No. 19 was produced by the following production method.

(First Step)

First, a hexagonal boron nitride powder (indicated as "hBN powder" in Table 1) having an average particle size of 10 $\mu$m and a binder powder having a composition shown in the column "Source Material Powders" of "First Step" of Table 1 were prepared as starting materials (source materials). When the binder powder includes two types of powders, the volume ratio of the two types of powders is described. For example, in sample No. 1, the binder powder includes a WC powder and an Al powder at a volume ratio of 3:2.

The mixing ratio of the hexagonal boron nitride powder and the binder powder was adjusted such that the ratio of the cubic boron nitride grains in the finally obtained cubic boron nitride sintered material became the ratio described in the column "cBN Grains (Volume%)" of the "Cubic Boron Nitride Sintered Material" in Table 1.

The hexagonal boron nitride powder and the binder powder were mixed for 5 hours using a ball mill. Thus, a powder mixture was obtained. The powder mixture was subjected to heat treatment at a temperature of 2050°C under a nitrogen atmosphere, thereby removing impurities (high temperature purification treatment).

(Second Step)

The powder mixture having been through the high temperature purification treatment was introduced into a capsule composed of a refractory metal, and was held at pressure, temperature, and time shown in the columns "Pressure (GPa)", "Temperature (°C)", and "Time (min)" of "Second Step" in Table 1 using an ultra-high pressure and high temperature generation apparatus, thereby obtaining the cubic boron nitride sintered material.

[Samples No. 7 to No. 12]

Each of cubic boron nitride sintered materials of samples No. 7 to No. 12 was produced by the following production method.

(First Step)

First, a cubic boron nitride powder (indicated as "cBN Powder" in Table 1) having an average particle size of 1 $\mu$m and a binder powder having a composition shown in the column "Source Material Powders" of "First Step" of Table 1 were prepared as starting materials (source materials). The cubic boron nitride powder is produced by a conventional method using a catalyst. When the binder powder includes two types of powders, the volume ratio of the two types of powders is described. For example, in sample No. 7, it is indicated that the volume ratio of a WC powder and an Al powder in the binder powder is 3:2.

The cubic boron nitride powder and the binder powder were blended at the following volume ratio: the cBN powder : the binder powder = 90 : 10. Further, the cubic boron nitride powder and the binder powder were mixed for 5 hours using a ball mill. Thus, a powder mixture was obtained. The powder mixture was subjected to heat treatment at a temperature of 2050°C under a nitrogen atmosphere, thereby removing impurities (high temperature purification treatment).

(Second Step)

The powder mixture having been through the high temperature purification treatment was introduced into a capsule composed of a refractory metal, and was held at pressure, temperature, and time shown in the columns "Pressure (GPa)", "Temperature (°C)", and "Time (min)" of "Second Step" in Table 1 using an ultra-high pressure and high temperature generation apparatus, thereby obtaining the cubic boron nitride sintered material.

[Table 1]

| Sample No. | Production Conditions | | | | Cubic Boron Nitride Sintered Material | | | | | | | | | | | | | Evaluation | |
|---|---|---|---|---|---|---|---|---|---|---|---|---|---|---|---|---|---|---|---|
| | First Step | Second Step | | | | | Number-Based Ratio of cBN Grains | | | | Contents of Catalyst Elements in cBN Grains (Mass%) | | | | | | | |
| | Source Material Powders | Pressure (GPa) | Temperature (°C) | Time (min) | cBN Grains (Volume%) | Binder Phase (Volume %) | Equivalent Circle Diameter of More Than 0.5 μm (%) | Equivalent Circle Diameter of More Than 2 μm (%) | Composition of Binder Phase | (IA+IB+IC)/ID | Li | Mg | Ca | Sr | Ba | Be | Number of Thermal Cracks after Processing for 5 Minutes (Number) | Cutting Time Until Occurrence of Breakage (min) |
| 1 | hBN, WC:Al=3:2 | 14 | 2400 | 50 | 65 | 35 | 95 | 40 | WC, AlN, AlB$_2$ | - | - | - | - | - | - | - | Breakage | 0.5 |
| 2 | hBN, WC:Al=3:2 | 14 | 2400 | 50 | 70 | 30 | 95 | 40 | WC, AlN, AlB$_2$ | - | - | - | - | - | - | - | 8 | 10 |
| 3 | hBN, WC:Al=3:2 | 14 | 2400 | 50 | 80 | 20 | 95 | 40 | WC, AlN, AlB$_2$ | - | - | - | - | - | - | - | 5 | 12 |
| 4 | hBN, WC:Al=3:2 | 14 | 2400 | 50 | 90 | 10 | 95 | 40 | WC, AlN, AlB$_2$ | - | - | - | - | - | - | - | 3 | 15 |
| 5 | hBN, WC:Al=3:2 | 14 | 2400 | 50 | 98 | 2 | 95 | 40 | WC, AlN, AlB$_2$ | - | - | - | - | - | - | - | 3 | 16 |
| 6 | hBN, WC:Al=3:2 | 14 | 2400 | 50 | 99.5 | 0.5 | 95 | 40 | WC, AlN, AlB$_2$ | - | - | - | - | - | - | - | Breakage | 4 |
| 7 | cBN, WC:Al=3:2 | 5 | 1250 | 20 | 90 | 10 | 95 | 40 | WC, AlN, AlB$_2$ | - | 0.006 | - | - | - | - | - | 16 | 6 |
| 8 | cBN, WC:Al=3:2 | 5 | 1250 | 20 | 90 | 10 | 95 | 40 | WC, AlN, AlB$_2$ | - | - | 0.008 | - | - | - | - | 14 | 6 |
| 9 | cBN, WC:Al=3:2 | 5 | 1250 | 20 | 90 | 10 | 95 | 40 | WC, AlN, AlB$_2$ | - | 0.006 | 0.005 | - | 0.03 | - | - | 18 | 5.3 |
| 10 | cBN, WC:Al=3:2 | 5 | 1250 | 20 | 90 | 10 | 95 | 40 | WC, AlN, AlB$_2$ | - | 0.013 | 0.007 | - | - | 0.03 | - | Breakage | 5 |
| 11 | cBN, WC:Al=3:2 | 5 | 1250 | 20 | 90 | 10 | 95 | 40 | WC, AlN, AlB$_2$ | - | | 0.006 | 0.05 | - | - | - | 13 | 5.5 |
| 12 | cBN, WC:Al=3:2 | 5 | 1250 | 20 | 90 | 10 | 95 | 40 | WC, AlN, AlB$_2$ | - | 0.019 | 0.007 | 0.01 | - | - | 0.05 | Breakage | 3 |

(continued)

| Sample No. | Production Conditions | | | | | | | | | | | | | | | | | Evaluation | |
|---|---|---|---|---|---|---|---|---|---|---|---|---|---|---|---|---|---|---|---|
| | First Step | Second Step | | | | | Number-Based Ratio of cBN Grains | | | | Contents of Catalyst Elements in cBN Grains (Mass%) | | | | | | | | |
| | Source Material Powders | Pressure (GPa) | Temperature (°C) | Time (min) | cBN Grains (Volume%) | Binder Phase (Volume %) | Equivalent Circle Diameter of More Than 0.5 $\mu$m (%) | Equivalent Circle Diameter of More Than 2 $\mu$m (%) | Composition of Binder Phase | $(IA+IB+IC)/ID$ | Li | Mg | Ca | Sr | Ba | Be | Number of Thermal Cracks after Processing for 5 Minutes (Number) | Cutting Time Until Occurrence of Breakage (min) |
| 13 | hBN, WC:Al=3:2 | 14 | 2400 | 15 | 90 | 10 | 35 | 3 | WC, AlN, $AlB_2$ | - | - | - | - | - | - | - | 13 | 6 |
| 14 | hBN, WC:Al=3:2 | 14 | 2400 | 40 | 90 | 10 | 77 | 10 | WC, AlN, $AlB_2$ | - | - | - | - | - | - | - | 3 | 12 |
| 15 | hBN, WC:Al=3:2 | 14 | 2400 | 45 | 90 | 10 | 95 | 8 | WC, AlN, $AlB_2$ | - | - | - | - | - | - | - | 3 | 14 |
| 16 | hBN, WC:Al=3:2 | 14 | 2400 | 30 | 90 | 10 | 55 | 45 | WC, AlN, $AlB_2$ | - | - | - | - | - | - | - | 7 | 10 |
| 17 | hBN, WC:Al=3:2 | 14 | 2400 | 90 | 90 | 10 | 95 | 58 | WC, AlN, $AlB_2$ | - | - | - | - | - | - | - | 13 | 7 |
| 18 | hBN, Al | 14 | 2400 | 40 | 98 | 2 | 95 | 40 | AlN, $AlB_2$ | - | - | - | - | - | - | - | 4 | 14 |
| 19 | hBN, WC:Co:Al =2:2:1 | 14 | 2400 | 40 | 80 | 20 | 95 | 40 | AlN, $AlB_2$, $W_2Co_{21}B_6$, WC | - | - | - | - | - | - | - | 5 | 13 |

<Measurement>

(Composition of Cubic Boron Nitride Sintered Material)

The composition of the cubic boron nitride sintered material of each of the samples (the content ratio of the cubic boron nitride and the content ratio of the binder phase) was measured by image analysis (using image processing software WinROOF) on an SEM reflected electron image. A specific measurement method is indicated in the first embodiment, and therefore will not be described repeatedly. Results are shown in the columns "cBN Grains (Volume%)" and "Binder Phase (Volume%)" of the "Cubic Boron Nitride Sintered Material" in Table 1.

(Composition of Binder Phase)

The composition of the binder phase of each sample was measured using an X-ray diffraction method. A specific measurement method is indicated in the first embodiment, and therefore will not be described repeatedly. Results are shown in the column "Composition of Binder Phase" in Table 1.

(Grain Sizes of Cubic Boron Nitride Grains)

The grain sizes of the cubic boron nitride grains of each of the samples were measured by image analysis using an SEM, and the number-based ratio of cubic boron nitride grains each having an equivalent circle diameter of more than 0.5 $\mu$m and the number-based ratio of cubic boron nitride grains each having an equivalent circle diameter of more than or equal to 2 $\mu$m were calculated. A specific measurement method is indicated in the first embodiment, and therefore will not be described repeatedly. Results are shown in the columns "Equivalent Circle Diameter of More Than 0.5 $\mu$m (%)" and "Equivalent Circle Diameter of More Than 2 $\mu$m (%)" of "Number-Based Ratio of cBN Grains" in Table 1.

(Content of Catalyst Elements)

Types and contents of the catalyst elements in the cubic boron nitride grains of each of the samples were measured by ICP emission spectrometry. A specific measurement method is indicated in the first embodiment, and therefore will not be described repeatedly. Results are shown in the column "Contents of Catalyst Elements in cBN Grains (Mass%)" in Table 1. It should be noted that when "-" is indicated in a result, it is indicated that the catalyst elements were not detected and the content thereof is less than the detection limit (0.001 mass%).

(X-Ray Diffraction Spectrum)

X-ray diffraction measurement was performed on the cubic boron nitride grains of each of the samples to obtain an X-ray diffraction spectrum. A specific measurement method is indicated in the first embodiment, and therefore will not be described repeatedly. Based on the X-ray diffraction spectrum, peak intensity IA originated from the compressed hexagonal boron nitride, peak intensity IB originated from the hexagonal boron nitride, peak intensity IC originated from the wurtzite type boron nitride, and peak intensity ID originated from the cubic boron nitride were measured to obtain the value of (IA+IB+IC)/ID. Results are shown in the column "(IA+IB+IC)/ID" in Table 1. It should be noted that when "-" is indicated in a result, it is indicated that none of peaks of peak intensity IA originated from the compressed hexagonal boron nitride, peak intensity IB originated from the hexagonal boron nitride, and peak intensity IC originated from the wurtzite type boron nitride was detected.

<Evaluation>

(Production of Cutting Tool and Evaluation on Cutting Performance)

A tool having a tool shape SNMN120408 was produced using the cubic boron nitride sintered material of each of the samples as its cutting edge. A milling process was performed using the tool under the following cutting conditions to evaluate the number of thermal cracks after processing for 5 minutes and a cutting time (minute) until occurrence of breakage.

(Cutting Conditions)

Cutting method: dry cutting
Workpiece: gray cast iron FC250
Cutting rate: 2800 m/min
Feed: 0.25 mm/rev.
Depth of cut: ae = 20 mm, ap = 0.3 mm

The above-described cutting conditions correspond to high-efficiency processing of gray cast iron. It is indicated that as the cutting time until occurrence of breakage is longer, the breakage resistance is higher and the cutting performance is more excellent. Results are shown in the columns "Number of Thermal Cracks after Processing for 5 Minutes (Number)" and "Cutting Time Until Occurrence of Breakage (min)" in Table 1. It should be noted that the description "Breakage" in the column "Number of Thermal Cracks after Processing for 5 Minutes (Number)" indicates that breakage occurred before passage of 5 minutes from the start of the processing.

<Analysis>

Each of the production conditions and the obtained cubic boron nitride sintered materials of samples No. 2 to No. 5, No. 14 to No. 16, No. 18 and No. 19 corresponds to an example of the present disclosure. Each of the tools employing these cubic boron nitride sintered materials exhibited excellent cutting performance even in the high-efficiency processing of gray cast iron.

In the cubic boron nitride sintered material obtained by the production method of sample No. 1, the content ratio of the cubic boron nitride grains was 65 volume%, which corresponds to a comparative example. Therefore, the production condition of sample No. 1 also corresponds to the comparative example. In the tool employing the cubic boron nitride sintered material, the time until occurrence of breakage is shorter than that in the example of the present disclosure. This is presumably due to the following reason: since the ratio of the cubic boron nitride grains was less than 70 volume%, the cBN grains could not form a skeleton structure, with the result that cBN grains fell during the cutting.

In the cubic boron nitride sintered material obtained by the production method of sample No. 6, the content ratio of the cubic boron nitride grains was 99.5 volume%, which corresponds to a comparative example. Therefore, the production condition of sample No. 6 also corresponds to the comparative example. In the tool employing the cubic boron nitride sintered material, the time until occurrence of breakage was shorter than that in the example of the present disclosure. This is presumably due to the following reason: since the ratio of the cubic boron nitride grains was more than 95 volume%, the ratio of the binder phase that maintains binding between the cubic boron nitride grains was small, a large number of defects were present in the sintered material, and neck growth between the cBN grains by the binder component was not promoted sufficiently, with the result that the cubic boron nitride grains were facilitated to fall.

Each of the production conditions of samples No. 7 to No. 12 employs a cubic boron nitride powder produced by a conventional method using a catalyst and corresponds to a comparative example. In each of the sintered materials of samples No. 7 to No. 12, the content of the catalyst elements in the cubic boron nitride grains was more than or equal to 0.002 mass%, which corresponds to a comparative example. It is understood that in each of tools employing these cubic boron nitride sintered materials, the number of thermal cracks in the 5 minutes of processing were larger than that in the example of the present disclosure and the time until occurrence of breakage was also shorter than that in the example of the present disclosure. This is presumably due to the following reason: since the catalyst elements present in the cubic boron nitride grains promoted phase conversion from cubic boron nitride to hexagonal boron nitride under a condition of pressure and temperature in the vicinity of a contact point with a workpiece during the processing, the thermal conductivity was decreased at the cutting edge portion region, thus resulting in deteriorated thermal resistance.

The production condition of sample No. 13 is such that a holding time is 15 minutes in the second step, and corresponds to a comparative example. In the cubic boron nitride sintered material of sample No. 13, the number-based ratio of the cubic boron nitride grains each having an equivalent circle diameter of more than 0.5 $\mu$m was 45%, which corresponds to a comparative example. In the tool employing the cubic boron nitride sintered material, the time until occurrence of breakage is shorter than that in the example of the present disclosure. This is presumably due to the following reason: since the content ratio of the cubic boron nitride grains each having an equivalent circle diameter of more than 0.5 $\mu$m was small, the ratio of the fine grains each having an equivalent circle diameter of less than or equal to 0.5 $\mu$m was large, with the result that the toughness and thermal conductivity were decreased to result in decreased breakage resistance.

The production condition of sample No. 17 was such that a holding time was 90 minutes in the second step, and corresponds to a comparative example. In the cubic boron nitride sintered material of sample No. 17, the cubic boron nitride grains included, on number basis, 58% of cubic boron nitride grains each having an equivalent circle diameter of more than or equal to 2 $\mu$m and the cubic boron nitride sintered material of sample No. 17 corresponds to a comparative example. In the tool employing the cubic boron nitride sintered material, the time until occurrence of breakage was shorter than that in the example of the present disclosure. This is presumably due to the following reason: since the content ratio of the cubic boron nitride grains each having an equivalent circle diameter of more than or equal to 2 μm was large, the strength was decreased to result in decreased breakage resistance.

[Example 2: Samples No. 4, No. 9, and No. 20 to No. 23]

<Production of Cubic Boron Nitride Sintered Material>

Cubic boron nitride sintered materials of samples No. 4 and No. 9 were produced in basically the same manner as in Example 1. In each of samples No. 20 to No. 23, a cubic boron nitride sintered material was produced in the same manner as in sample No. 1 except that the conditions in the first step and the second step were changed to those shown in the columns "First Step" and "Second Step" in Table 2.

[Table 2]

| Sample No. | Production Conditions | | | | Cubic Boron Nitride Sintered Material | | | | | | Evaluation |
| | First Step | Second Step | | | cBN Grains (Volume%) | Binder Phase (Volume%) | Number-Based Ratio of cBN Grains | | Composition of Binder Phase | (IA+IB+IC)/ID | Contents of Catalyst Elements in cBN Grains (Mass%) | | | | | | Flank Wear Amount (mm) |
| | Binder Powder (Volume%/Composition) | Pressure (GPa) | Temperature (°C) | Time (min) | | | Equivalent Circle Diameter of More Than 0.5 $\mu$m (%) | Equivalent Circle Diameter of More Than 2 $\mu$m (%) | | | Li | Mg | Ca | Sr | Ba | Be | |
|---|---|---|---|---|---|---|---|---|---|---|---|---|---|---|---|---|---|
| 4 | hBN, WC:Al=3:2 | 14 | 2400 | 50 | 90 | 10 | 95 | 40 | WC, AlN, AlB$_2$ | - | - | - | - | - | - | - | 0.055 |
| 9 | cBN, WC:Al=3:2 | 5 | 1250 | 20 | 90 | 10 | 95 | 40 | WC, AlN, AlB$_2$ | - | 0.006 | 0.005 | - | 0.03 | - | - | 0.126 |
| 20 | hBN, WC:Al=3:2 | 14 | 2380 | 50 | 90 | 10 | 95 | 40 | WC, AlN, AlB$_2$ | 0.018 | - | - | - | - | - | - | 0.063 |
| 21 | hBN, WC:Al=3:2 | 15 | 2350 | 50 | 90 | 10 | 95 | 40 | WC, AlN, AlB$_2$ | 0.04 | - | - | - | - | - | - | 0.070 |
| 22 | hBN, WC:Al=3:2 | 16 | 2320 | 50 | 90 | 10 | 95 | 40 | WC, AlN, AlB$_2$ | 0.059 | - | - | - | - | - | - | 0.089 |
| 23 | hBN, WC:Al=3:2 | 17 | 2300 | 50 | 90 | 10 | 95 | 40 | WC, AlN, AlB$_2$ | 0.106 | - | - | - | - | - | - | 0.093 |

<Measurement>

In each of the samples, the composition of the cubic boron nitride sintered material (the content of the cubic boron nitride and the content of the binder phase), the composition of the binder phase, the grain sizes of the cubic boron nitride grains, the content of the catalyst elements, and the X-ray diffraction spectrum were measured in the same manner as in Example 1. Results are shown in Table 2.

<Evaluation>

(Production of Cutting Tool and Evaluation on Cutting Performance)

A tool having a tool shape SNMN120408 was produced using the cubic boron nitride sintered material of each of the samples as its cutting edge. An outer diameter turning process was performed using the tool under the following cutting conditions to evaluate wear resistance and breakage resistance.

(Cutting Conditions)

Cutting method: wet cutting
Workpiece: ductile cast iron, FCD700 round bar
Cutting rate: 300 m/min
Feed: 0.2 mm/rev.
Depth of cut: ap = 0.2 mm
Evaluation method: flank wear amount (unit: mm) when cutting was performed for 10 minutes.

The above-described cutting conditions correspond to high-efficiency processing of ductile cast iron. It is indicated that as the flank wear amount is smaller, the wear resistance is higher and the cutting performance is more excellent. Results are shown in the column "Flank Wear Amount (mm)" in Table 2.

<Analysis>

Each of the production conditions and the obtained cubic boron nitride sintered materials of samples No. 4 and No. 20 to No. 23 corresponds to an example of the present disclosure. In each of the tools employing these cubic boron nitride sintered materials, excellent wear resistance was exhibited even in the high-efficiency processing of ductile cast iron. Among them, in each of the cubic boron nitride sintered materials of samples No. 20 and No. 21, the value of (IA+IB+IC)/ID was less than or equal to 0.05, and the wear resistance was very excellent.

The production condition of sample No. 9 employs a cubic boron nitride powder produced by a conventional method using a catalyst and corresponds to a comparative example. In the sintered material of sample No. 9, the content of the catalyst elements in the cubic boron nitride grains was more than or equal to 0.001 mass%, which corresponds to a comparative example. In the tool employing the cubic boron nitride sintered material, the flank wear amount was large and the wear resistance was inferior as compared with those in the example of the present disclosure. This is presumably due to the following reason: the catalyst elements present in the cubic boron nitride grains promoted phase conversion from cubic boron nitride to hexagonal boron nitride under a condition of pressure and temperature in the vicinity of a contact point with the workpiece during the processing, with the result that the thermal conductivity was decreased in the cutting edge portion region to result in deteriorated thermal resistance.

**Claims**

1. A cubic boron nitride sintered material comprising: more than or equal to 70 volume% and less than or equal to 98 volume% of cubic boron nitride grains; and a binder phase, wherein

the binder phase includes at least one selected from a group consisting of one or more first compounds and a solid solution originated from the first compounds, the one or more first compounds being selected from a group consisting of a cobalt compound, an aluminum compound, and tungsten carbide,
the cubic boron nitride grains include, as measured in the description and on number basis, more than or equal to 50% of cubic boron nitride grains each having an equivalent circle diameter of more than 0.5 $\mu$m, and includes, on

number basis, less than or equal to 50% of cubic boron nitride grains each having an equivalent circle diameter of more than 2 $\mu$m, and

when a mass of the cubic boron nitride grains is assumed as 100 mass%, a total content of lithium, magnesium, calcium, strontium, beryllium, and barium in the cubic boron nitride grains is less than 0.001 mass%.

2. The cubic boron nitride sintered material according to claim 1, wherein

in an X-ray diffraction spectrum of the cubic boron nitride sintered material, a relation of the following formula I is indicated:

$$(IA+IB+IC)/ID \leq 0.05 \ ... \ formula \ I,$$

where

IA represents a peak intensity originated from compressed hexagonal boron nitride, IB represents a peak intensity originated from hexagonal boron nitride, IC represents a peak intensity originated from wurtzite type boron nitride, and ID represents a peak intensity originated from cubic boron nitride.

3. A method of producing the cubic boron nitride sintered material according to claim 1 or 2, the method comprising:

obtaining a powder mixture by mixing a hexagonal boron nitride powder and a binder powder; and obtaining the cubic boron nitride sintered material by sintering the powder mixture by increasing a pressure to more than or equal to 8 GPa and less than or equal to 20 GPa, increasing a temperature to more than or equal to 2300°C and less than or equal to 2500°C, and holding, for more than or equal to 30 minutes and less than 90 minutes, the powder mixture at maximum pressure and maximum temperature reached by increasing the pressure and the temperature.


**Patentansprüche**

1. Gesintertes Material aus kubischem Bornitrid, das umfasst: mehr als oder gleich 70 Volumenprozent und weniger als oder gleich 98 Volumenprozent an Körnern aus kubischem Bornitrid; und eine Bindephase, wobei

die Bindephase mindestens eine Verbindung enthält, die aus einer Gruppe ausgewählt ist, die aus einer oder mehreren ersten Verbindungen und einer festen Lösung besteht, die aus den ersten Verbindungen entstanden ist, wobei die einen oder mehreren ersten Verbindungen aus einer Gruppe ausgewählt sind, die aus einer Kobaltverbindung, einer Aluminiumverbindung und Wolframkarbid besteht,
die Körner aus kubischem Bornitrid, wie in der Beschreibung und auf Zahlenbasis gemessen, mehr als oder gleich 50 % Körner aus kubischem Bornitrid enthalten, die jeweils einen äquivalenten Kreisdurchmesser von mehr als 0,5 $\mu$m aufweisen, und, auf Zahlenbasis, weniger als oder gleich 50 % Körner aus kubischem Bornitrid enthalten, die jeweils einen äquivalenten Kreisdurchmesser von mehr als 2 $\mu$m aufweisen, und
wenn die Masse der Körner aus kubischem Bornitrid mit 100 Ma% angenommen wird, ein Gesamtgehalt an Lithium, Magnesium, Kalzium, Strontium, Beryllium und Barium in den Körnern aus kubischem Bornitrid weniger als 0,001 Ma% beträgt.

2. Gesintertes Material aus kubischem Bornitrid nach Anspruch 1, wobei

in einem Röntgenbeugungsspektrum des gesinterten Materials aus kubischem Bornitrid eine Beziehung der folgenden Formel I angezeigt wird:

$$(IA+IB+IC)/ID \leq 0,05 \qquad Formel \ I,$$

wobei

IA für eine Spitzenintensität steht, die von komprimiertem hexagonalem Bornitrid stammt, IB für eine Spitzenintensität steht, die von hexagonalem Bornitrid stammt, IC für eine Spitzenintensität steht, die von wurtzitartigem Bornitrid stammt, und ID für eine Spitzenintensität steht, die von kubischem Bornitrid stammt.

3. Verfahren zur Herstellung des gesinterten Materials aus kubischem Bornitrid nach Anspruch 1 oder 2, wobei das Verfahren umfasst:

Erhalten einer Pulvermischung durch Mischen eines Pulvers aus hexagonalem Bornitrid und eines Bindemittelpulvers; und
Erhalten des gesinterten Materials aus kubischem Bornitrid durch Sintern der Pulvermischung durch Erhöhen des Drucks auf mehr als oder gleich 8 GPa und weniger als oder gleich 20 GPa, Erhöhen der Temperatur auf mehr als oder gleich 2300 °C und weniger als oder gleich 2500 °C und Halten der Pulvermischung bei maximalem Druck und maximaler Temperatur, die durch Erhöhen des Drucks und der Temperatur erreicht werden, während mehr als oder gleich 30 Minuten und weniger als 90 Minuten.

**Revendications**

1. Matériau fritté en nitrure de bore cubique comprenant: plus de ou égal à 70 % en volume et moins de ou égal à 98 % en volume de grains de nitrure de bore cubique, et une phase de liant, dans lequel

la phase de liant inclut au moins un choisi dans un groupe consistant en un ou plusieurs premiers composés et une solution solide provenant des premiers composés, les un ou plusieurs premiers composés étant choisis dans un groupe consistant en un composé du cobalt, un composé de l'aluminium et le carbure de tungstène,
les grains de nitrure de bore cubique incluent, comme mesuré dans la description et sur une base numérique, plus de ou égal à 50 % de grains de nitrure de bore cubique ayant chacun un diamètre de cercle équivalent supérieur à 0,5 μm, et inclut, sur une base numérique, moins de ou égal à 50 % de grains de nitrure de bore cubique ayant chacun un diamètre de cercle équivalent supérieur à 2 μm, et
lorsqu'une masse des grains de nitrure de bore cubique est supposée être de 100 % en masse, une teneur totale en lithium, magnésium, calcium, strontium, béryllium et baryum dans les grains de nitrure de bore cubique est inférieure à 0,001 % en masse.

2. Matériau fritté en nitrure de bore cubique selon la revendication 1, dans lequel

dans un spectre de diffraction des rayons X du matériau fritté en nitrure de bore cubique, une relation de formule I suivante est indiquée:

$$(IA+IB+IC)/ID \leq 0,05 \quad \text{formule I,}$$

où
IA représente une intensité de pic provenant de nitrure de bore hexagonal comprimé, IB représente une intensité de pic provenant de nitrure de bore hexagonal, IC représente une intensité de pic provenant de nitrure de bore de type wurtzite, et ID représente une intensité de pic provenant de nitrure de bore cubique.

3. Procédé de production du matériau fritté en nitrure de bore cubique selon la revendication 1 ou 2, le procédé comprenant:

l'obtention d'un mélange de poudres par mélange d'une poudre de nitrure de bore hexagonal et d'une poudre de liant; et
l'obtention du matériau fritté en nitrure de bore cubique par frittage du mélange de poudres par augmentation d'une pression à plus de ou égale à 8 GPa et moins de ou égale à 20 GPa, par augmentation d'une température à plus de ou égale à 2300°C et moins de ou égale à 2500°C, et par maintien, pendant plus de ou égale à 30 minutes et moins de 90 minutes, du mélange de poudres à la pression maximale et à la température maximale atteintes par augmentation de la pression et de la température.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005187260 A
- WO 2005066381 A
- JP 2015202981 A
- JP 2015202980 A
- US 2017369314 A1